# EUROPEAN PATENT SPECIFICATION

(11) **EP 3 191 402 B1**
(45) Date of publication and mention of the grant of the patent: **20.06.2018**
(21) Application number: 15727178.4
(22) Date of filing: 19.05.2015
(51) Int. Cl.: C01B 39/48

(54) **METHOD FOR PREPARING ZEOLITE SSZ-52**
VERFAHREN ZUR HERSTELLUNG VON ZEOLITH SSZ-52
PROCÉDÉ DE PRÉPARATION DE ZÉOLITE SSZ-52

(30) Priority: 09.09.2014 US 201414480837; 09.09.2014 US 201462047775 P
(43) Date of publication of application: 19.07.2017
(73) Proprietor: Chevron U.S.A. Inc., San Ramon, California 94583 (US)
(72) Inventor: LIU, Tianxiang, San Ramon, California 94583 (US); DAVIS, Tracy Margaret, San Ramon, California 94583 (US); LEW, Christopher Michael, San Ramon, California 94583 (US); XIE, Dan, San Ramon, California 94583 (US); ELOMARI, Saleh Ali, San Ramon, California 94583 (US); DEEM, Michael W., San Ramon, California 94583 (US)
(74) Representative: Haseltine Lake LLP
(86) International application number: PCT/US2015/031471
(87) International publication number: WO 2016/039825

(56) References cited:
- US-B1- 6 254 849
- US-B1- 6 620 401
- US-B2- 6 616 911
- XIE D ET AL: "SSZ-52, a zeolite with an 18-layer aluminosilicate framework structure related to that of the DeNOx catalyst Cu-SSZ-13", JOURNAL OF THE AMERICAN CHEMICAL SOCIETY 20130717 AMERICAN CHEMICAL SOCIETY USA, vol. 135, no. 28, 17 July 2013 (2013-07-17), pages 10519-10524, XP002743653, DOI: 10.1021/JA4043615
- BURTON A ET AL: "SSZ-60: A NEW LARGE-PORE ZEOLITE RELATED TO ZSM-23", CHEMICAL COMMUNICATIONS > CHEMICAL COMMUNICATIONS - CHEMCOM; [6015D], ROYAL SOCIETY OF CHEMISTRY, GB, 1 January 2004 (2004-01-01), pages 2618-2619, XP002312194, ISSN: 1359-7345, DOI: 10.1039/B410010G

## Description

### TECHNICAL FIELD

This disclosure is generally directed to methods for preparing zeolite SSZ-52.

### BACKGROUND

Molecular sieves such as zeolites have been used extensively to catalyze a number of chemical reactions in refinery and petrochemical reactions, and catalysis, adsorption, separation, and chromatography. For example, with respect to zeolites, both synthetic and natural zeolites and their use in promoting certain reactions, including conversion of methanol to olefins (MTO reactions) and the selective catalytic reduction (SCR) of nitrogen oxides with a reductant such as ammonia, urea or a hydrocarbon in the presence of oxygen, are well known in the art. Zeolites are crystalline materials having rather uniform pore sizes which, depending upon the type of zeolite and the type and amount of cations included in the zeolite lattice, range from about 3 to 10 Å (0.3 to 1 nm) in diameter.

Zeolites having 8-ring pore openings and double-six ring secondary building units, particularly those having cage-like structures have recently found interest in use as SCR catalysts. A specific type of zeolite having these properties is the zeolite SSZ-52 which has been assigned the framework type **SFW** by Structure Commission of the International Zeolite Association. SSZ-52 has a three-dimensional 8-ring channel system and is a member of the ABC-6 family of zeolites (stacking sequence AABBAABBCCBBCCAACC), but it has cavities that are significantly larger than any known ABC-6 family member.

U.S. Patent No. 6,254,849 discloses zeolite SSZ-52 and its synthesis in the presence of N,N-diethyl-5,8-dimethyl-azonium bicyclo[3.2.2.]nonane cation as a structure directing agent.

The commercial development of SSZ-52 has been hindered by the high cost of the N,N-diethyl-5,8-dimethyl-azonium bicyclo[3.2.2.]nonane cation structure directing agent required in U.S. Patent No. 6,254,849 for its synthesis and hence there has been significant interest in finding alternative, less expensive structure directing agents for the synthesis of SSZ-52.

Accordingly, it has now been found that additional relatively simple cations described herein can be effective as structure directing agents in the synthesis of SSZ-52.

### SUMMARY

In one aspect, there is provided a process for preparing zeolite SSZ-52 by:
(a) preparing a reaction mixture comprising, in terms of mole ratios, the following:

| | |
|---|---|
| SiO₂/X₂O*_{b}* | 15 to 60 |
| OH/SiO₂ | 0.30 to 1.0 |
| (Q + A)/SiO₂ | 0.10 to 0.40 |
| M/SiO₂ | 0.10 to 0.50 |
| H₂O/SiO₂ | 15 to 50 |

wherein:
(1) X is Al;
(2) stoichiometric variable b equals the valence state of compositional variable X;
(3) Q is at least one organic structure directing agent, and Q > 0, and wherein Q is selected from the group consisting of an N-ethyl-N-(2,4,4-trimethylcyclopentyl)pyrrolidinium cation, an N-ethyl-N-(3,3,5-trimethylcyclohexyl)pyrrolidinium cation, and mixtures thereof;
(4) A is an auxiliary structure directing agent comprising an N-cyclohexylmethyl-N-ethylpiperidinium cation, and A ≥ 0; and
(5) M is selected from the group consisting of elements from Groups 1 and 2 of the Periodic Table; and

(b) subjecting the reaction mixture to crystallization conditions sufficient to form crystals of the zeolite.

In yet another aspect, there is provided zeolite SSZ-52 having a composition, as-synthesized and in the anhydrous state, in terms of mole ratios, as follows:

| | |
|---|---|
| SiO₂/X₂O*_{b}* | 6 to 50 |
| (Q + A)/SiO₂ | 0.02 to 0.08 |
| M/SiO₂ | 0.03 to 0.20 |

wherein (1) X is Al, and mixtures thereof; (2) stoichiometric variable *b* equals the valence state of compositional variable X (e.g., when X is trivalent, *b* = 3; when X is pentavalent, *b* = 5); (3) Q is at least one organic structure directing agent represented by structure (1) below, and Q > 0; (4) A is an auxiliary structure directing agent comprising an N-cyclohexylmethyl-N-ethylpiperidinium cation, and A ≥ 0; and (5) M is selected from the group consisting of elements from Groups 1 and 2 of the Periodic Table; wherein Q is selected from the group consisting of an N-ethyl-N-(2,4,4-trimethylcyclopentyl)pyrrolidinium cation, an N-ethyl-N-(3,3,5-trimethylcyclohexyl)pyrrolidinium cation, and mixtures thereof.

### BRIEF DESCRIPTION OF THE DRAWINGS

FIG. 1 shows the powder X-ray diffraction (XRD) pattern of the as-synthesized zeolite product of Example 1.
FIG. 2 shows a Scanning Electron Micrograph (SEM) of the as-synthesized zeolite product of Example 1.
FIG. 3 shows the powder XRD pattern of the as-synthesized zeolite product of Example 2.

### DETAILED DESCRIPTION

### Introduction

The term "alkyl" refers to a straight chain or a branched chain saturated hydrocarbon group. Some examples of straight chain and branched chain saturated aliphatic groups are methyl, ethyl, propyl, isopropyl, and the like.

As used herein, the numbering scheme for the Periodic Table Groups is as disclosed in Chem. Eng. News, 63(5), 27 (1985).

The synthesis of zeolite SSZ-52 is conducted in the presence of at least one organic structure directing agent ("SDA") having the structure (1): 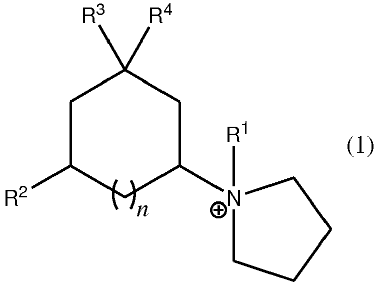 wherein R¹, R², R³ and R⁴ are independently selected from the group consisting of alkyl groups having from 1 to 3 carbon atoms and *n* has a value of 0, 1 or 2.

Exemplary cationic organic structure directing agents include N-methyl-N-(2,4,4-trimethylcyclopentyl)pyrrolidinium, N-ethyl-N-(2,4,4-trimethylcyclopentyl)pyrrolidinium, N-propyl-N-(2,4,4-trimethylcyclopentyl)pyrrolidinium, N-isopropyl-N-(2,4,4-trimethylcyclopentyl)pyrrolidinium, N-methyl-N-(3,3,5-trimethylcyclohexyl)pyrrolidinium, N-ethyl-N-(3,3,5-trimethylcyclohexyl)pyrrolidinium, N-propyl-N-(3,3,5-trimethylcyclohexyl)pyrrolidinium, N-isopropyl-N-(3,3,5-trimethylcyclohexyl)pyrrolidinium, N-methyl-N-(3,3,5-trimethylcycloheptyl)pyrrolidinium, N-ethyl-N-(3,3,5-trimethylcycloheptyl)pyrrolidinium, N-propyl-N-(3,3,5-trimethylcycloheptyl)pyrrolidinium, N-isopropyl-N-(3,3,5-trimethylcycloheptyl)pyrrolidinium, and the like, and mixtures thereof.

The organic structure directing agent is selected from the group consisting of an N-ethyl-N-(2,4,4-trimethylcyclopentyl)pyrrolidinium cation, an N-ethyl-N-(3,3,5-trimethylcyclohexyl)pyrrolidinium cation, and mixtures thereof. The N-ethyl-N-(2,4,4-trimethylcyclopentyl)pyrrolidinium cation and the N-ethyl-N-(3,3,5-trimethylcyclohexyl)pyrrolidinium cation are represented by the following structures (2) and (3), respectively: 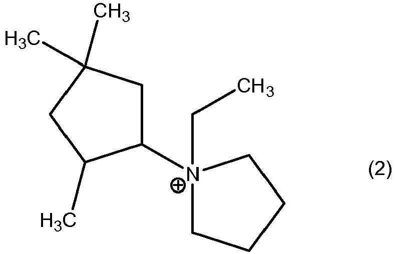 N-ethyl-N-(2,4,4-trimethylcyclopentyl)pyrrolidinium cation 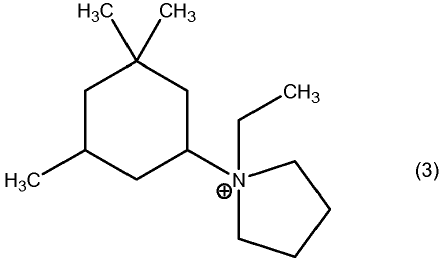 N-ethyl-N-(3,3,5-trimethylcyclohexyl)pyrrolidinium cation

U.S. Patent Nos. 6,616,911 and 6,620,401 disclose the synthesis of zeolite SSZ-60 in the presence of an N-ethyl-N-(2,4,4-trimethylcyclopentyl)pyrrolidinium cation or an N-ethyl-N-(3,3,5-trimethylcyclohexyl)pyrrolidinium cation. SSZ-60 possesses a one-dimensional channel system with pores delimited by twelve-membered rings. SSZ-60 has been assigned the framework type **SSY** by Structure Commission of the International Zeolite Association.

The SDA cation is associated with anions which can be any anion that is not detrimental to the formation of SSZ-52. Representative anions include elements from Group 17 of the Periodic Table (e.g., fluoride, chloride, bromide, and iodide), hydroxide, sulfate, tetrafluoroborate, acetate, carboxylate, and the like.

### Reaction Mixture

In general, zeolite SSZ-52 is prepared by: (a) preparing a reaction mixture containing (1) at least one source of silicon; (2) one or more sources of one or more oxides of Al; (3) at least one source of an element selected from Groups 1 and 2 of the Periodic Table; (4) at least one organic structure directing agent represented by structure (1) herein; (5) optionally, an auxiliary structure directing agent comprising an N-cyclohexylmethyl-N-ethylpiperidinium cation; (6) hydroxide ions; and (7) water; and (b) subjecting the reaction mixture to crystallization conditions sufficient to form crystals of the zeolite.

The composition of the reaction mixture from which SSZ-52 is formed, in terms of mole ratios, is identified in Table 1 below:

**TABLE 1**

| | |
|---|---|
| SiO₂/X₂O*_{b}* | 15 to 60 |
| OH/SiO₂ | 0.30 to 1.0 |
| (Q + A)/SiO₂ | 0.10 to 0.40 |
| M/SiO₂ | 0.10 to 0.50 |
| H₂O/SiO₂ | 15 to 50 |

wherein compositional variables X, Q, A, M and stoichiometric variable b are as described herein above.

When the auxiliary structure directing agent (A) is present, the Q/A mole ratio of the reaction mixture can range from 1:1 to 10:1 (e.g., from 1:1 to 5:1, from 2:1 to 10:1, or from 2:1 to 5:1).

Sources useful herein for silicon include fumed silica, precipitated silicates, silica hydrogel, silicic acid, colloidal silica, tetra-alkyl orthosilicates (e.g., tetraethyl orthosilicate), and silica hydroxides.

For each embodiment described herein, X is aluminum. Sources of elements for compositional variable X include oxides, hydroxides, acetates, oxalates, ammonium salts and sulfates of the element(s) selected for X. Typical sources of aluminum oxide include aluminates, alumina, and aluminum compounds such as AlCl₃, Al₂(SO₄)₃, Al(OH)₃, kaolin clays, and other zeolites. An example of the source of aluminum oxide is zeolite Y.

Q is selected from the group consisting of an N-ethyl-N-(2,4,4-trimethylcyclopentyl)pyrrolidinium cation, an N-ethyl-N-(3,3,5-trimethylcyclohexyl)pyrrolidinium cation, and mixtures thereof.

As described herein above, the reaction mixture is formed using at least one source of an element selected from Groups 1 and 2 of the Periodic Table (referred to herein as M). In one sub-embodiment, the reaction mixture is formed using a source of an element from Group 1 of the Periodic Table. In another sub-embodiment, the reaction mixture is formed using a source of sodium (Na). Any M-containing compound which is not detrimental to the crystallization process is suitable. Sources for such Groups 1 and 2 elements include oxides, hydroxides, halides, nitrates, sulfates, acetates, oxalates, and citrates thereof.

For each embodiment described herein, the zeolite reaction mixture can be supplied by more than one source. Also, two or more reaction components can be provided by one source.

The reaction mixture can be prepared either batch wise or continuously. Crystal size, morphology and crystallization time of the zeolite described herein can vary with the nature of the reaction mixture and the synthesis conditions.

### Crystallization and Post-Synthesis Treatment

In practice, zeolite SSZ-52 is prepared by: (a) preparing a reaction mixture as described herein above; and (b) subjecting the reaction mixture to crystallization conditions sufficient to form crystals of the zeolite (see, e.g., H. Robson, "Verified Syntheses of Zeolitic Materials," Second Revised Edition, Elsevier, 2001).

The reaction mixture is maintained at an elevated temperature until the zeolite is formed. The hydrothermal crystallization is usually conducted under pressure, and usually in an autoclave so that the reaction mixture is subject to autogenous pressure, at a temperature of from 125°C to 200°C.

The reaction mixture can be subjected to mild stirring or agitation during the crystallization step. It will be understood by a skilled artisan that the zeolites described herein may contain impurities, such as amorphous materials, unit cells having framework topologies which do not coincide with the zeolite, and/or other impurities (e.g., organic hydrocarbons).

During the hydrothermal crystallization step, the zeolite crystals can be allowed to nucleate spontaneously from the reaction mixture. The use of crystals of the zeolite as seed material can be advantageous in decreasing the time necessary for complete crystallization to occur. In addition, seeding can lead to an increased purity of the product obtained by promoting the nucleation and/or formation of the zeolite over any undesired phases. When used as seeds, seed crystals are added in an amount of from 1% to 10% of the weight of the source for silicon used in the reaction mixture.

Once the zeolite has formed, the solid product is separated from the reaction mixture by standard mechanical separation techniques such as filtration. The crystals are water-washed and then dried to obtain the as-synthesized zeolite crystals. The drying step can be performed at atmospheric pressure or under vacuum.

The zeolite can be used as-synthesized, but typically will be thermally treated (calcined). The term "as-synthesized" refers to the zeolite in its form after crystallization, prior to removal of the SDA cation. The SDA can be removed by thermal treatment (e.g., calcination), preferably in an oxidative atmosphere (e.g., air, gas with an oxygen partial pressure of greater than 0 kPa) at a temperature readily determinable by a skilled artisan sufficient to remove the SDA from the zeolite. The SDA can also be removed by photolysis techniques (e.g., exposing the SDA-containing zeolite product to light or electromagnetic radiation that has a wavelength shorter than visible light under conditions sufficient to selectively remove the organic compound from the zeolite) as described in U.S. Patent No. 6,960,327.

The zeolite can subsequently be calcined in steam, air or inert gas at temperatures ranging from 200°C to 800°C for periods of time ranging from 1 to 48 hours, or more. Usually, it is desirable to remove the extra-framework cation (e.g., Na⁺) by ionexchange or other known method and replace it with hydrogen, ammonium, or any desired metal-ion.

### Characterization of the Zeolite

SSZ-52 made by the process disclosed herein have a composition, as-synthesized and in the anhydrous state, as described in Table 2 (in terms of mole ratios):

**TABLE 2**

| | |
|---|---|
| SiO₂/X₂O*_{b}* | 6 to 50 |
| (Q + A)/SiO₂ | 0.02 to 0.08 |
| M/SiO₂ | 0.03 to 0.20 |

wherein compositional variables X, Q, A, M and stoichiometric variable b are as described herein above.

Q is selected from the group consisting of an N-ethyl-N-(2,4,4-trimethylcyclopentyl)pyrrolidinium cation, an N-ethyl-N-(3,3,5-trimethylcyclohexyl)pyrrolidinium cation, and mixtures thereof.

The SSZ-52 zeolites synthesized by the process described herein are characterized by their X-ray diffraction pattern. XRD patterns representative of SSZ-52 can be referenced in U.S. Patent No. 6,254,849. Minor variations in the diffraction pattern can result from variations in the mole ratios of the framework species of the particular sample due to changes in lattice constants. In addition, sufficiently small crystals will affect the shape and intensity of peaks, leading to significant peak broadening. Minor variations in the diffraction pattern can also result from variations in the organic compound used in the preparation. Calcination can also cause minor shifts in the X-ray diffraction pattern. Notwithstanding these minor pertubations, the basic crystal structure remains unchanged.

The powder X-ray diffraction patterns presented herein were collected by standard techniques. The radiation was CuK_{α} radiation. The peak heights and the positions, as a function of 2θ where θ is the Bragg angle, were read from the relative intensities of the peaks and d, the interplanar spacing corresponding to the recorded lines, can be calculated.

### EXAMPLES

The following illustrative examples are intended to be non-limiting.

### EXAMPLE 1

A Teflon liner was charged with 2.7 g of an aqueous solution of N-ethyl-N-(3,3,5-trimethylcyclohexyl)pyrrolidinium hydroxide (0.625 mmol OH/g solution) followed by 1.30 g of a IN NaOH solution. 2.46 g of a sodium silicate solution was then added dropwise to the mixture followed by 0.42 g of a commercial ammonium-exchanged Y zeolite (CBV300®, Zeolyst International, SiO₂/Al₂O₃ mole ratio = 5.1, 25% water). The final composition of the reaction mixture, in terms of mole ratios, was as follows:

| | |
|---|---|
| Si/Al | 10.6 |
| Q/Si | 0.11 |
| Na/Si | 0.54 |
| H₂O/Si | 18 |

The liner was then capped and placed within a Parr steel autoclave reactor. The autoclave was then fixed in a rotating spit (43 rpm) within an oven and heated at 135°C for seven days. The solid products were recovered from the cooled reactor by vacuum filtration and washed with deionized water. The solids were allowed to dry overnight at room temperature.

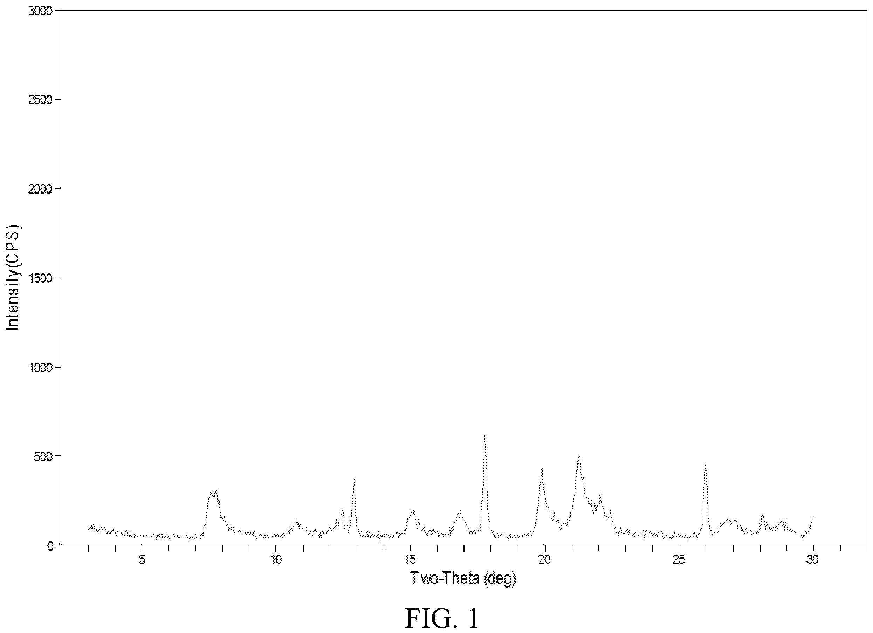

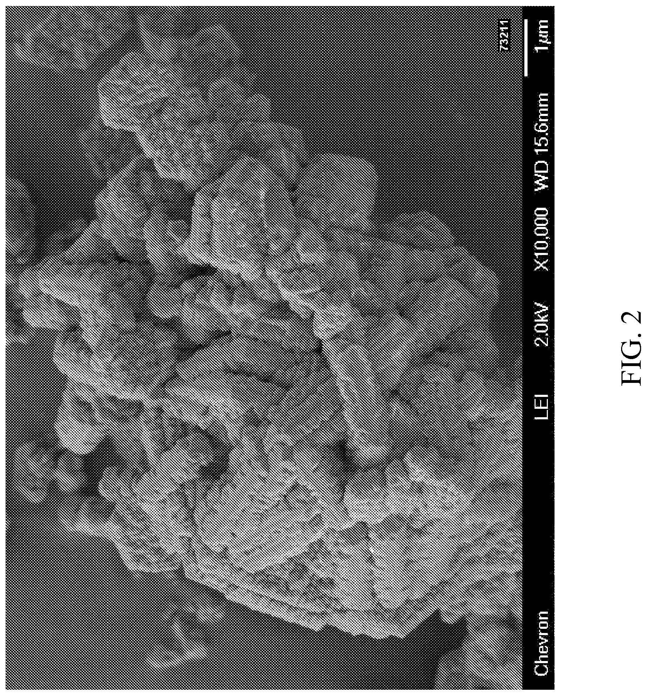

The resulting product was analyzed by powder XRD and SEM. The powder XRD pattern is shown in FIG. 1 and indicated that the material was SSZ-52. The SEM image shown in FIG. 2 indicates a uniform field of crystals.

### EXAMPLE 2

A Teflon liner was charged with 4.12 g of an aqueous solution of N-ethyl-N-(2,4,4-trimethylcyclopentyl)pyrrolidinium hydroxide (0.364 mmol OH/g solution) followed by 1.30 g of a IN NaOH solution. 2.46 g of a sodium silicate solution was then added dropwise to the mixture followed by 0.42 g of a commercial ammonium-exchanged Y zeolite (CBV300®, Zeolyst International, SiO₂/Al₂O₃ mole ratio = 5.1, 25% water). Finally, 2.14 g of DI water were added to the Teflon liner. The final composition of the reaction mixture, in terms of mole ratios, was as follows:

| | |
|---|---|
| Si/Al | 10.6 |
| Q/Si | 0.095 |
| Na/Si | 0.54 |
| H₂O/Si | 30.9 |

The liner was then capped and placed within a Parr steel autoclave reactor. The autoclave was then fixed in a rotating spit (43 rpm) within an oven and heated at 135°C for seven days. The solid products were recovered from the cooled reactor by vacuum filtration and washed with deionized water. The solids were allowed to dry overnight at room temperature.

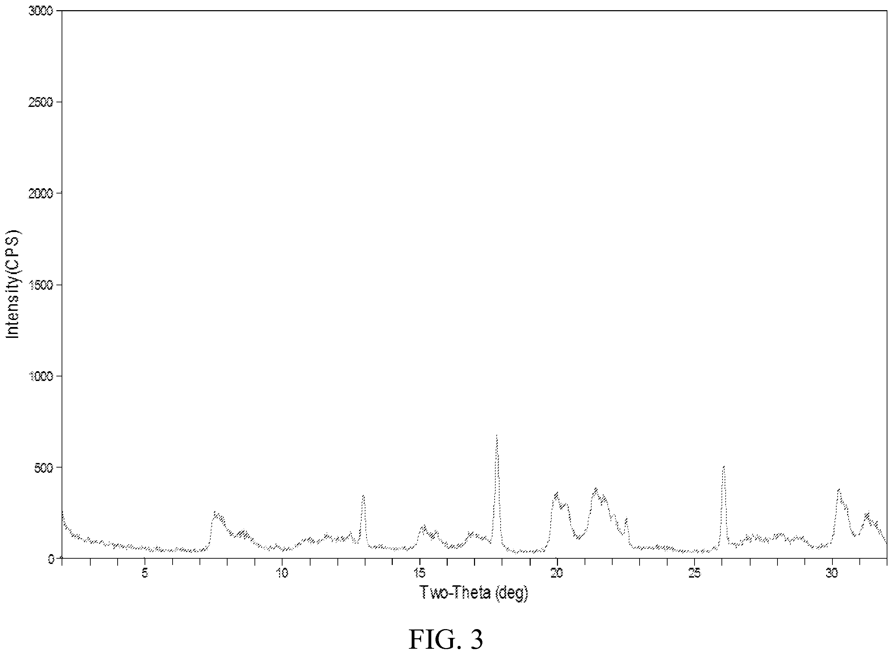

The resulting product was analyzed by powder XRD. The powder XRD pattern is shown in FIG. 3 and indicated that the material was SSZ-52.

### EXAMPLE 3

### Synthesis of Auxiliary Structure Directing Agent

### N-Cyclohexylmethyl-N-ethylpiperidinium Cation

A 1000 mL 3-necked round bottom flask fitted with an overhead stirrer was charged with 24.29 g of triethylamine (TEA), 17.42 g of piperidine and 400 mL of toluene. The mixture was cooled in an ice bath. A dropping funnel was charged with a solution of 29.55 g of cyclohexanecarbonyl chloride in 100 mL of toluene. The cyclohexanecarbonyl chloride solution was then added dropwise to the mixture in the round bottom flask and the mixture was allowed to stir overnight. The reaction mixture was then concentrated under vacuum to remove most of the toluene. Water (113 g) was added to the residual white solid followed by ethyl acetate (200 mL). The organic layer was collected and concentrated under vacuum to provide cyclohexyl-piperidin-1-yl-methanone.

An addition funnel was charged with a solution of 38.82 g of cyclohexyl-piperidin-1-yl-methanone in 200 mL of methylene chloride. A 2 L 3-necked round bottom flask was charged with 350 mL of methylene chloride and 10.17 g of lithium aluminum hydride (LiAlH₄). The mixture in the round bottom flask was cooled in an ice bath and kept under a nitrogen atmosphere. The cyclohexyl-piperidin-1-yl-methanone solution was added dropwise to the round bottom flask over two hours. After an additional 30 minutes, the ice bath was removed and the reaction mixture was allowed to warm up to room temperature and allowed to stir overnight. The resulting suspension was then cooled in an ice bath. Water (12 g) was added slowly to the mixture with vigorous stirring followed by 12 g of a 15% aqueous NaOH solution. An additional 50 mL of methylene chloride was added to the mixture to replace some of the evaporated solvent. An additional 40 g of water was added slowly to the mixture. The mixture was then allowed to warm up to room temperature. The solids were filtered and washed two times with methylene chloride to remove any entrained product. The filtrate was collected, dried with sodium sulfate, and concentrated under vacuum to provide 34.15 g of N-cyclohexylmethylpiperidine.

N-Cyclohexylmethylpiperidine (34.15 g) was dissolved in 300 mL of methanol. An addition funnel was charged with a solution of 62 g of ethyl iodide in 100 mL of methanol. The ethyl iodide solution was added dropwise to the N-cyclohexylmethylpiperidine solution and then refluxed for 48 hours. The mixture was then concentrated under vacuum to remove most of the ethyl iodide and methanol. N-cyclohexylmethyl-N-ethylpiperidinium iodide (49.9 g) was recrystallized from hot acetone and diethyl ether.

The obtained N-cyclohexylmethyl-N-ethylpiperidinium iodide was dissolved in deionized water (1 mL H₂O/1 mmol salt) and then 1.1 g of hydroxide-based ion exchange resin/1 mmol salt was added. The resulting slurry was left to stir gently for a few hours. The slurry was filtered and the filtrate was analyzed by titration of a small aliquot with dilute HCl. The exchange afforded N-cyclohexylmethyl-N-ethylpiperidinium hydroxide in nearly quantitative yield.

Scheme 1 below depicts the synthesis of the N-cyclohexylmethyl-N-ethylpiperidinium cation.

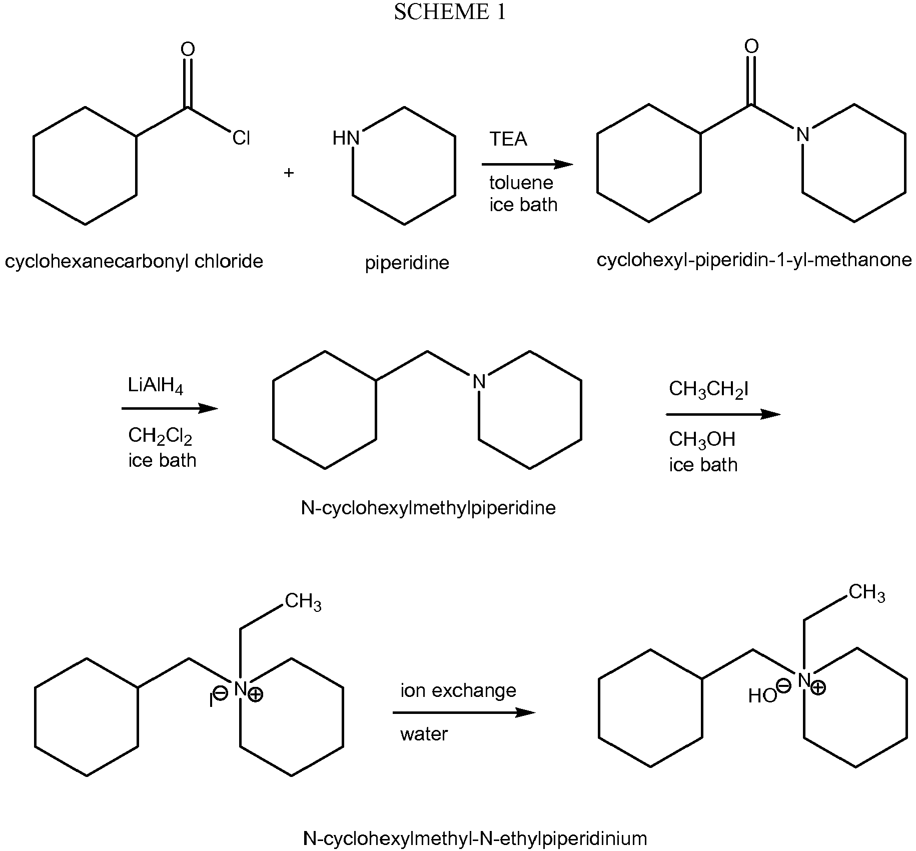

### EXAMPLE 4

Example 1 was repeated except that an auxiliary structure directing agent (A), N-cyclohexylmethyl-N-ethylpiperidinium hydroxide, was added to the reaction mixture. The Q/A ratio of the reaction mixture was 4:1. The final composition of the reaction mixture, in terms of mole ratios, was as follows:

| | |
|---|---|
| Si/Al | 10.6 |
| (Q + A)/Si | 0.11 |
| Na/Si | 0.54 |
| H₂O/Si | 28.9 |

The resulting product was analyzed by powder XRD. The powder XRD pattern indicated that the material was SSZ-52.

For the purposes of this specification and appended claims, unless otherwise indicated, all numbers expressing quantities, percentages or proportions, and other numerical values used in the specification and claims, are to be understood as being modified in all instances by the term "about." Furthermore, all ranges disclosed herein are inclusive of the endpoints and are independently combinable. Whenever a numerical range with a lower limit and an upper limit are disclosed, any number falling within the range is also specifically disclosed.

As used herein, the term "comprising" means including elements or steps that are identified following that term, but any such elements or steps are not exhaustive, and an embodiment can include other elements or steps.

Unless otherwise specified, the recitation of a genus of elements, materials or other components, from which an individual component or mixture of components can be selected, is intended to include all possible sub-generic combinations of the listed components and mixtures thereof.

Any term, abbreviation or shorthand not defined is understood to have the ordinary meaning used by a skilled artisan at the time the application is filed. The singular forms "a," "an," and "the," include plural references unless expressly and unequivocally limited to one instance.

## Claims

1. A method for preparing zeolite SSZ-52, comprising:
(a) preparing a reaction mixture comprising, in terms of mole ratios, the following:
| | |
|---|---|
| SiO₂/X₂O*_{b}* | 15 to 60 |
| OH/SiO₂ | 0.30 to 1.0 |
| (Q + A)/SiO₂ | 0.10 to 0.40 |
| M/SiO₂ | 0.10 to 0.50 |
| H₂O/SiO₂ | 15 to 50 |
wherein:
(1) X is Al;
(2) stoichiometric variable b equals the valence state of compositional variable X;
(3) Q is at least one organic structure directing agent, and Q > 0, and wherein Q is selected from the group consisting of an N-ethyl-N-(2,4,4-trimethylcyclopentyl)pyrrolidinium cation, an N-ethyl-N-(3,3,5-trimethylcyclohexyl)pyrrolidinium cation, and mixtures thereof;
(4) A is an auxiliary structure directing agent comprising an N-cyclohexylmethyl-N-ethylpiperidinium cation, and A ≥ 0; and
(5) M is selected from the group consisting of elements from Groups 1 and 2 of the Periodic Table; and
(b) subjecting the reaction mixture to crystallization conditions sufficient to form crystals of the zeolite.

2. A crystalline SSZ-52 zeolite having a composition, as-synthesized and in its anhydrous state, comprising, in terms of mole ratios, the following:
| | |
|---|---|
| SiO₂/X₂O*_{b}* | 6 to 50 |
| (Q + A)/SiO₂ | 0.02 to 0.08 |
| M/SiO₂ | 0.02 to 0.20 |
wherein:
(1) X is Al;
(2) stoichiometric variable b equals the valence state of compositional variable X;
(3) Q is at least one organic structure directing agent represented by the following structure: 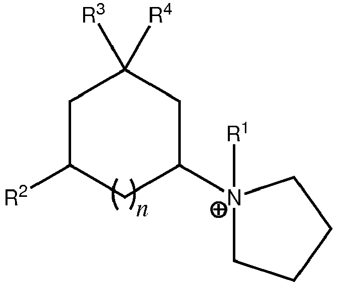 wherein (i) R¹, R², R³ and R⁴ are independently selected from the group consisting of alkyl groups having from 1 to 3 carbon atoms; (ii) n has a value of 0, 1 or 2; and (iii) Q > 0;
(4) A is an N-cyclohexylmethyl-N-ethylpiperidinium cation, and A ≥ 0; and
(5) M is selected from the group consisting of elements from Groups 1 and 2 of the Periodic Table; and
wherein Q is selected from the group consisting of an N-ethyl-N-(2,4,4-trimethylcyclopentyl)pyrrolidinium cation, an N-ethyl-N-(3,3,5-trimethylcyclohexyl)pyrrolidinium cation, and mixtures thereof.

## Patentansprüche

1. Herstellungsverfahren für ein Zeolith SSZ-52, umfassend
(a) Herstellen eines Reaktionsgemischs umfassend, nach Molarverhältnissen, Folgendes:
| | |
|---|---|
| SiO₂/X₂O*_{b}* | 15 bis 60 |
| OH / SiO₂ | 0,30 bis 1,0 |
| (Q+A)/ SiO₂ | 0,10 bis 0,40 |
| M/SiO₂ | 0,10 bis 0,50 |
| H₂O/SiO₂ | 15 bis 50 |
worin
(1) X Al ist;
(2) die stoechiometrische Variable b gleich der Wertigkeit der Zusammensetzungs-Variablen X ist;
(3) Q mindestens ein organisches Strukturleitmittel ist, und Q > 0, und worin Q ausgewählt ist aus der Gruppe bestehend aus einem N-Ethyl-N-(2,4,4-trimethylcyclopentyl)pyrrolidinium-Kation, einem N-Ethyl-N-(3,3,5-trimethylcyclohexyl)pyrrolidinium-Kation und deren Gemischen;
(4) A ein Hilfsstrukturleitmittel ist, umfassend ein N-Cyclohexylmethyl-N-ethylpiperidinium-Kation und A ≥ 0; und
(5) M ausgewählt ist aus der Gruppe bestehend aus Elementen der Gruppen 1 und 2 der Periodentafel; und
(b) Aussetzen des Reaktionsgemisches an Kristallisierungsbedingungen, ausreichen zum Bilden von Kristallen des Zeoliths.

2. Kristallines Zeolith SSZ-52 mit einer Zusammensetzung, wie synthetisiert und in seinem anhydren Zustand, umfassend, nach Molarverhältnissen, Folgendes:
| | |
|---|---|
| SiO₂ /X₂O*_{b}* | 6 bis 50 |
| (Q+A)/SiO₂ | 0,02 bis 0,08 |
| M/SiO₂ | 0,02 bis 0,20 |
worin
(1) X Al ist;
(2) die stoechiometrische Variable b gleich der Wertigkeit der Zusammensetzungs-Variablen X ist;
(3) Q mindestens ein organisches Strukturleitmittel ist, dargestellt durch die folgende Struktur 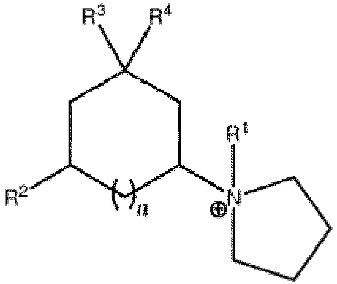 worin (i) R¹, R², R³ und R⁴ unabhängig ausgewählt sind aus der Gruppe Alkylgruppen mit 1 bis 3 Kohlenstoffatomen; (ii) *n* einen Wert von 0, 1 oder 2 hat; und (iii) Q > 0;
(4) A ein N-Cyclohexylmethyl-N-ethylpiperidinium-Kation ist und A ≥ 0; und
(5) M ausgewählt ist aus der Gruppe bestehend aus Elementen der Gruppen 1 und 2 der Periodentafel; und
worin Q ausgewählt ist aus der Gruppe bestehend aus einem N-Ethyl-N-(2,4,4-trimethylcyclopentyl)pyrrolidinium-Kation, einem N-Ethyl-N-(3,3,5-trimethylcyclohextyl)pyrrolidinium-Kation und deren Gemischen.

## Revendications

1. Procédé de préparation d'une zéolite SSZ-52, comprenant :
(a) préparer un mélange réactionnel comprenant, en termes de rapports molaires, les suivants :
| | |
|---|---|
| SiO₂/X₂O*_{b}* | 15 à 60 |
| OH/SiO₂ | 0,30 à 1,0 |
| (Q+A)/SiO₂ | 0,10 à 0,40 |
| M/SiO₂ | 0,10 à 0,50 |
| H₂O/SiO₂ | 15 à 50 |
où :
(1) X est Al ;
(2) la variable stoéchiométrique b est égale à l'état de valence de la variable compositionnelle X ;
(3) Q est au moins un agent directeur de structure, et Q > 0, et où Q est sélectionné parmi le groupe constitué en un cation N-éthyle-N-(2,4,4-triméthylecyclopentyle)pyrrolidinium, un cation N-éthyle-N-(3,3,5-triméthylecyclohexyle)pyrrolidinium, et leurs mélanges ;
(4) A est un agent directeur de structure auxiliaire comprenant an cation N-cyclohexyleméthyle-N-éthylepipéridinium, et A ≥ 0 ; et
(5) M est sélectionné parmi le groupe constitué en éléments des Groupes 1 et 2 du Tableau Périodique ; et
(b) exposer le mélange réactionnel à des conditions de cristallisation suffisantes pour former des cristaux de la zéolite.

2. Zéolite SSZ-52 cristalline ayant une composition, comme synthétisée, comprenant, en termes de rapports molaires, les suivants :
| | |
|---|---|
| SiO₂ /X₂O*_{b}* | 6 à 50 |
| (Q+A)/SiO₂ | 0,02 à 0,08 |
| M/SiO₂ | 0,02 à 0,20 |
où :
(1) X est Al ;
(2) la variable stoéchiométrique b est égale à l'état de valence de la variable compositionnelle X ;
(3) Q est au moins un agent directeur de structure représenté par la structure suivante : 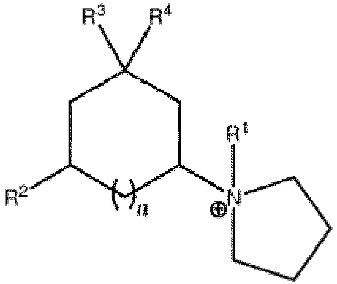 où (i) R¹, R², R³ et R⁴ sont indépendamment sélectionnés parmi le groupe constitué en des groupes alkyle ayant de 1 à 3 atomes de carbone ; (ii) *n* a une valeur de 0, 1 ou 2 ; et (iii) Q > 0 ;
(4) A est un cation N-cyclohexyleméthyle-N-éthylepipéridinium, et A ≥ 0 ; et
(5) M est sélectionné parmi le groupe constitué en éléments des Groupes 1 et 2 du Tableau Périodique ; et
où Q est sélectionné parmi le groupe constitué en un cation N-éthyle-N-(2,4,4-triméthylecyclopentyle)pyrrolidinium, un cation N-éthyle-N-(3,3,5-triméthylecyclohexyle)pyrrolidinium, et leurs mélanges.
